# EUROPEAN PATENT APPLICATION

(11) **EP 1 195 401 A1**
(43) Date of publication of application: **10.04.2002**
(21) Application number: 00929776.3
(22) Date of filing: 17.05.2000
(51) Int. Cl.: C08L 3/00, C08L 29/04, C08K 5/17, C08J 5/00, B32B 27/30

(54) **COMPOSITION HAVING SELECTIVE PERMEABILITY FOR CARBON DIOXIDE, FORMED ARTICLE COMPRISING THE SAME, FILM AND LAMINATED FILM**

(30) Priority: 18.05.1999 JP 13710999
(71) Applicant: Kureha Chemical Industry Co., Ltd., Tokyo 103-0012 (JP)
(72) Inventor: HOSODA, Tomonori, Niihari-gun, Ibaraki 315-0052 (JP); OBA, Hiroyuki, Niihari-gun, Ibaraki 315-0053 (JP); TANAKA, Hideaki, Niihari-gun, Ibaraki 315-0052 (JP)
(74) Representative: Benson, John Everett
(86) International application number: JP0003162
(87) International publication number: WO0125327

(57) **Abstract**

A composition having selective permeability for carbon dioxide, which comprises a mixture of a basic amino acid selected from among lysine, arginine, histigine and the like, poly(vinyl alcohol), and a polyhydric alcohol such as starch, has an isoelectric point of 7.5 or more, and, when formed, exhibits a high ratio of the permeability of carbon dioxide (PCO₂) to that of oxygen gas(PO₂); and a formed article comprising the composition. A film as such a formed product is safe from the viewpoint of food sanitation and can be suitably used for packaging a fermented food such as cheese, miso or pickles, and a food generating carbon dioxide such as garlic or coffee beans, and for packaging vegetables, fruits, cut flowers or the like.

## Description

### TECHNICAL FIELD

The present invention relates to a composition comprising a mixture of a specified material, to a composition having selective permeability to carbon dioxide gas, and to a molded article, in particular film, comprising the same. More particularly, the present invention relates to a composition comprising a mixture of a basic amino acid and a polyalcohol, to a molded article, in particular, afilm, comprising the same and a laminate film comprising such films. The present invention provides a film having a high ratio, PCO₂/PO₂, of carbon dioxide permeability (PCO₂) to oxygen gas permeability (PO₂), and have safety from the viewpoint of food sanitation. The film can be suitably used as a packaging film for fermentative foods, vegetables and cut flowers.

### BACKGROUND ART

In the field of food packaging, as technologies related to a film that selectively permeate carbon dioxide gas, for example, JP-A-5-222215 discloses a molded article for packaging food, which comprises a composition containing (A) a polyvinyl alcohol resin and (B) a compound which is selected from the group consisting of alkylene glycol monomer, hydroxy acid monomer, and polymers thereof, and which has a ratio of the solubility of carbon dioxide gas to the solubility of oxygen gas of 30 or more. This publication describes that the film obtained from the molded article are suitable for packaging foods, which generate much carbon dioxide gas and are disfavored by contacting oxygen, for example, cheese products, coffee beans and so forth. JP-A-9-316208 describes that a film obtained by heat treatment of a reaction mixture comprising polyacrylic acid and an aliphatic diamine has a resistance to water and has a ratio of carbon dioxide gas permeability to oxygen gas permeability of 15 or more. Although it does not relate to food packaging, JP-A-11-538 describes that a film made from a polymer having a polyamine structure has a high ratio of carbon dioxide gas permeability to oxygen gas permeability.

### DISCLOSURE OF THE INVENTION

An object of the present invention is to economically provide a molded article and a film having high safety from the viewpoint of food sanitation, and also having a high selective permeability to carbon dioxide gas, which has high ratio of carbon dioxide permeability to oxygen gas permeability

The inventors of the present invention have found that a composition comprising a mixture of a basic amino acid and a polyalcohol has a high ratio of carbon dioxide gas permeability to oxygen gas permeability and can solve the problems. The present invention has been achieved based on this finding.

That is, the present invention provides a composition comprising a basic amino acid having an isoelectric point of 7.5 or more and a polyalcohol and a composition, which has selective permeability to carbon dioxide gas when it is molded. Also, in the above-mentioned inventions, there is provided a composition in which the basic amino acid is at least one selected from the group consisting of lysine, arginine and histidine, and the polyalcohol is at least one selected from the group consisting of polyvinyl alcohol and starch, respectively. Furthermore, the present invention provides the above-mentioned composition, in which the mixing ratio (amino group or imino group contributing to the basicity of the basic amino acid/hydroxyl group of the polyalcohol) (molar ratio) is 0.025/1 to 2.0/1. The present invention provides a molded article comprising the composition according to the above-mentioned inventions and a molded article, in which the ratio (PCO₂/PO₂) of carbon dioxide gas permeability (PCO₂) to oxygen gas permeability (PO₂) is 15 or more, and a molded article as a film. Furthermore, the present invention provides a laminate film comprising at least one film comprising the composition according to the above-mentioned inventions and the laminate film for packaging food.

### BEST MODE FOR CARRYING OUT THE INVENTION

The present invention will be described in more detail.

As used herein, the term "having selective permeability to carbon dioxide" refers to the case where the ratio of carbon dioxide gas permeability to oxygen gas permeability (PCO₂/PO₂) is preferably 15 or more, more preferably 16 or more, most preferably 20 or more as measured at a humidity of 80% and at a temperature of 23°C.

As used herein, the term "basic amino acids" refers to amino acids having a basic side chain. of those, at least one basic amino acid selected from lysine, arginine (these have one amino acid, which shows basicity), and histidine (having one imino group, which shows basicity) is preferably used from the view points of film forming property and production costs thereof. Because of isoelectric point of 7.5 or more, the obtained film has a higher ratio of carbon dioxide gas permeability to oxygen gas permeability.

As used herein, the term "polyalcohol" includes compounds ranging from a low molecular weight compound having two or more hydroxyl groups in the molecule to alcohol-based polymers. It includes polyvinyl alcohol (PVA),saccharides and starches.
Examples of the low molecular weight compound having two or more hydroxyl groups in the molecule include glycerin, ethylene glycol, propylene glycol, 1,3-propanediol, pentaerythritol, polyethylene glycol, polypropylene glycol, and so forth. PVA having a degree of saponification of usually 60% or more, preferably 80% or more and an average degree of polymerization of usually 300 to 2400 is preferable. Monosaccharides, oligosaccharides and polysaccharides are used as saccharides. These saccharides include sugar alcohols such as sorbitol, mannitol, dulcitol, xylitol, and erythritol, and various substitution compounds and derivatives thereof. These saccharides are preferably those that are soluble in water or alcohol or mixed solvents comprising water and alcohol.

Starchesareincludedin the polysaccharides described above. The starches used in the present invention include green starches (unmodified starches) such as wheat starch, cornstarch, glutinous cornstarch, potato starch, tapioca starch, rice starch, sweet potato starch, and sago starch. Besides various processed starches are also available. Processed starches include physically modified starches, enzymatically modified starches, chemically decomposed modified starches, chemically modified starches,. graft starches obtained by graft polymerizing monomers to starches, and so forth.

Of those starches, water-soluble processed starches, obtained, for example, by hydrolyzing potato starch with an acid are preferable. Sugar alcohols obtained by substituting a terminal group (aldehyde group) of starch by a hydroxyl group are more preferable. The starches may be hydrated. These starches may be used alone or two or more of them may be used in combination. Among them, at least one polyalcohol selected from the group consisting of polyvinyl alcohol and starches is preferably used from the viewpoint of film formation property.

The mixing ratio between the basic amino acid and the polyalcohol (amino group or imino group contributing to the basicity of the basic amino acid/hydroxyl group of the polyalcohol) by mole is preferably 0.025/1 to 2.0/1, more preferably 0.1/1 to 1/1. The mixing ratio of less than 0.025 /1 is not preferable, since no selective permeability to carbon dioxide gas is obtained. Themixing ratio of more than 2.0/1 is not preferable either, since water content after film formation increases so that it's handling becomes difficult.

The method of mixing the basic amino acid and the polyalcohol is not particularly limited. Any of the following methods: a method of mixing an aqueous solution of the basic amino acid prepared in advance with an aqueous solution of the polyalcohol prepared in advance, a method of adding powder of the basic amino acid to an aqueous solution of the polyalcohol, and a method of adding powder of the polyalcohol to an aqueous solution or suspension of the basic amino acid, may be used. When mixing the both materials, substantially no exothermic or endothermic phenomenon is observed.

The composition can be molded into a film by a solvent casting method in which a solution is cast on a support (substrate) such as a metal plate, a glass plate or a plastic film and dried to form a film, an extrusion method in which a high concentration water-dissolved solution of the mixture is extruded through an extruder under a discharge pressure and cast through a slit into a film-like form, and then the water-containing film is dried on a rotating drum or belt, or a stretching method in which the aqueous solution is coated on a plastic film, and then the coated film as a whole is stretched under heating, or the like. Alternatively, in the case of a substrate having a complex configuration, a method in which the substrate is dipped in a solution of the material composition to coat the surface of the substrate or the like may be used. The dry film thus obtained is referred to as a molded film. Among the film forming methods described above, in particular solvent casting methods (casting method, coating method) are preferably used because molded films (dry films) having an excellent transparence can be readily obtained thereby.

In the case where the solvent casting method is adopted, the concentration of solids (which indicates the total concentration of the polyalcohol and the basic amino acid, including the case where the polyalcohol is liquid at the ambient temperature) is preferably about 1 to about 30 mass%. When an aqueous solution is prepared, solvents other than water, such as alcohol and softening agents may be optionally added as desired. Also, plasticizers (excluding the low molecular weight compounds having two or more hydroxyl groups in the molecule), heat stabilizers and so forth may be blended thereto in advance to at least one of the components. The thickness of the molded article comprising the composition of the present invention may optionally be defined depending on its use, and is not particularly limited. Preferably, the thickness is about 0.01 to about 100 µm, more preferably about 0.1 to about 50 µm.

In the coating method, a dry film (molded film) can be formed as follows. That is, a mixture solution of L-arginine, for example, as the basic amino acid and saccharide, for example, as thepolyalcohol is coated on a support (substrate) , such as a metal plate, a glass plate, or a plastic as the substrate to a desired thickness using a device such as an air knife coater, a kiss roll coater, a metering bar coater, a gravure roll coater, a reverse roll coater, a dip coater, a die coater or a combination of such devices. Then, using a device such as arch drier, a straight bath drier, a tower drier, a floating drier, a drum drier, or a combination of such devices, the moisture is evaporated by blasting hot air or irradiating infrared radiation to make the film dry, thus forming a dry film (molded film).

The drying conditions are not particularly limited. For example, the film may be dried in a drier at 60 to 300°C for 0.1 to 30 minutes to evaporate the moisture. The coating thickness may be determined optionally depending on the degree of the selective permeability to be obtained, oxygen gas barrier properties, and so forth.

The coated formed film, which has been dried, may be used together with the substrate as a molded film, or the coated film may be peeled off and used alone or laminated with other substrates before it can be used. The material that constitutes the substrate layer is preferably at least one material selected from a film comprising a thermoplastic resin, a film comprising a thermosetting resin, paper, cloth, nonwoven fabric, metal porous material or inorganic sintered porous material. The substrate layer may be optionally selected taking uses of the laminated film into consideration and taking care so that the gas permeability of the substrate layer will not extremely prevent the gas selective permeability of the laminate film, or the like.

The material of the film comprising a thermoplastic resin is not particularly limited, but includes, for example, polyester, polyolefin, polystyrene, polyvinyl chloride, polyamide, polyvinylidene fluoride (PVDF), polytetrafluoroethylene, and so forth. Polyester, polyvinylidene fluoride and polyolefin are preferable. The polyester includes polyethylene terephthalate (PET), polyethylene isophthalate, polybutylene terephthalate, poly (1,4-cyclohexylenedimethylene terephthalate), polyethylene 2,6-naphthalenedicarboxylate, and so forth and copolymers and mixtures thereof, as well as blends of them with a small amount of other resins.

The polyolefin includes homopolymers or copolymers of olefins, copolymers of olefins with other copolymerizable monomers, for example, vinyl-based monomers, and modified polymers thereof, and so forth. More specifically, high-density polyethylene, low-density polyethylene (hereinafter abbreviated as "LDPE"), linear low-density polyethylene (hereinafter abbreviated as "LLDPE"), linear very low-density polyethylene (hereinafter abbreviated "VLDPE"), polypropylene, ethylene/propylene copolymer, poly(4-methylpentene-1) (hereinafter abbreviated as "TPX"), ionomer resins, ethylene/vinyl acetate copolymer (hereinafter abbreviated as "EVA"), ethylene/acrylic acid copolymer, ethylene/methacrylic acid copolymer (hereinafter abbreviated as "EMAA"), ethylene/methyl acrylate copolymer, ethylene/methyl methacrylatecopolymer, modifiedpolyolefins (for example, reaction products between homopolymers, copolymers or the like of olefins and unsaturated carboxylic acids such as maleic acid and fumaric acid, acid anhydrides, esters or metal salts thereof, or the like). The above-mentioned polyolefins may be used alone or two or more of them may be used in admixture. Among them, TPX, VLDPE, EVA, EMAA, LLDPE, ethylene/acrylic acid copolymer and so forth are preferred in view of the physical properties of the obtained laminate film.

The above-mentioned laminate film according to the present invention comprises a molded article (molded film) that comprises a mixture of a basic amino acid and a polyalcohol, and a substrate. In the film formed state, the molded film may be isolated from the substrate before it can be used. Other layer structures include a laminate structure of substrate/molded film/substrate. Specific examples thereof include porous PET/molded film/LDPE, TPX/molded film/EVA, TPX/molded film/porous LLDPE, porous PVDF/molded film/porous LLDPE, LDPE/molded film/LDPE, LDPE/molded film/EVA, TPX/molded film/LDPE and so forth. The thickness of the molded film is preferably 1 to 100 µm, more preferably 1 to 50 µm. If the adhesive force between the substrate layer and the molded film is particularly desired, an adhesive or an anchoring agent may be used. The total thickness of the laminated films is preferably 15 to 400 µm, more preferably 20 to 200 µm.

One of the outer layers of a laminated film is preferably produced from a material which enables heat sealing, high-frequency sealing, or ultrasonic sealing, (i.e., sealant), in consideration of thermal adhesion of the films when a bag etc. is produced from the laminate films. Examples of resins which enable heat sealing include polyolefins such as low density polyethylene, linear low density polyethylene, high density polyethylene, an ethylene/vinyl acetate copolymer, an ethylene-based copolymer produced by use of a metallocene catalyst, a propylene-based copolymer produced by used of metallocene catalyst, non-stretched polypropylene, an ethylene/acrylate copolymer, an ethylene acrylic acid salt copolymer, and an ethylene/ethyl acrylate copolymer; and nylon copolymers such as a nylon 6·66 copolymer, and a nylon 6·12 copolymer. Examples of resins that enable high-frequency sealing include polyvinyl chloride, polyvinylidene chloride, nylon 6, and nylon 66.

The compositions, molded articles, films, laminate films formed therefrom thus obtained according to the present invention provide a film that has a high ratio of carbon dioxide gas permeability and oxygen gas permeability and also has safety from the viewpoint of food sanitation. Therefore, they can be suitably used as a packaging material for packaging: fermented foods such as cheese, fermented soybean paste, and pickles; foods which generate carbon dioxide gas such as garlic, coffee beans and so forth; or for packaging vegetables, fruits, cut flowers and so forth.

### Examples

Herein below, the present invention will be described specifically by way of Examples, which should not be construed as limiting the invention thereto.

### [Measurement of Oxygen Gas and Carbon Dioxide Gas Permeability]

Oxygen gas permeability and carbon dioxide gas permeability of samples in the form of a laminate film were measured under the conditions of a temperature of 23°C and a relative humidity of 80% by use of a mixture gas permeability measuring apparatus (film double surfaces moistening gas permeability measuring tester, manufactured by GL Science Co., Ltd.). As the test gas, the mixture gas (CO₂:O₂ = 20:80 vol%) was used. As the permeated gas detector, a gas chromatograph (GC-390) manufactured by GL Science Co., Ltd. was used. Also, Porapak N was used as the column.

### (Ratio of Carbon Dioxide Gas Permeability to Oxygen Gas Permeability)

The ratio of carbon dioxide gas permeability to oxygen gas permeability was obtained from the carbon dioxide gas permeability and oxygen gas permeability by dividing the carbon dioxide gas permeability by the oxygen gas permeability.

### (Examples 1 and 2)

PVA 405 (degree of saponification: 80%, degree of polymerization: 500, product of Kuraray Co., Ltd.) (hereinafter, abbreviated as "PVA1") as polyvinyl alcohol and L-lysine (isoelectric point; 9.74, product of Wako Pure Chemical Industries, Ltd.) (Example 1) and L-arginine so (isoelectric point: 10.76, product of Wako Pure Chemical Industries, Ltd.) (Example 2) as the basic amino acid were used. Water was added to PVA1 and the mixture was kept on a warm water bath adjusted to 80°C to prepare a 30 mass% aqueous solution of PVA1. L-lysine was adjusted to 20 mass% by addition of water. Then, 497.7 mass parts (99.54 mass parts in terms of solids) of aqueous L-lysine solution was added to 100 mass parts (30 mass parts in terms of solids) of the aqueous PVA1 solution so that the degree of saponification of PVA was adjusted and converted amount was a molar ratio of 1.0 of L-lysine per PVA monomer unit. The resulting mixture was stirred with a magnetic stirrer at 200 rpm for 1 hour at room temperature to obtain a mixed aqueous solution (Example 1).

Then, the mixed aqueous solution was coated on a 23 µm thick poly(4-methylpentene-1) (TPX, product of Mitsui Chemical, Inc. hereinafter abbreviated as "TPX") film by use of a Mayer bar. This was placed in a drier and dried at 90°C for 20 minutes to evaporate the moisture to obtain a laminate film having a TPX film substrate and a 5 µm thick dry molded film consisting of a composition of PA1 and L-lysine coated on the TPX film substrate (Example 1).

In the case of L-Arginine, a 12.5 mass% aqueous solution was prepared by addition of water. Then, 949.1 mass parts (118.6 mass parts in terms of solids) of aqueous L-arginine solution was added to 100 mass parts (30 mass parts in terms of solids) of the aqueous PVA1 solution used in Example 1 so that the degree of saponification of PVA was adjusted and converted amount was a molar ratio of 1.0 of L-arginine per PVA monomer unit. The resulting mixture was stirred with a magnetic stirrer at 200 rpm for 1 hour at room temperature to obtain a mixed aqueous solution (Example 2). The obtained mixed aqueous solution was coated on a TPX film substrate in the same manner as in Example 1 to obtain a laminate film (Example 2).

### (Comparative Example 1)

Water was added to PVA1 and the mixture was kept on a warm water bath adjusted to 80°C to prepare a 15 mass% aqueous solution of PVA 1. Then, the aqueous PVA1 solution was coated on a 23 µm thick TPX film by use of a Mayer bar. Then, this was placed in a drier and dried at 90°C for 20 minutes to evaporate the moisture to obtain a laminate having a TPX film substrate and a 5 µm thick dry film consisting of PA1 coated on the TPX film substrate.

### (Comparative Example 2)

Since L-asparagine (isoelectric point; 2.77) was substantially insoluble in water, powdery preparation of L asparagine was used. 45.3 mass parts of powdery L-asparagine was added to 100 mass parts of the aqueous PAV1 solution used in Comparative Example 1 so that the molar ratio of L-asparagine per PVA1 monomer unit was 1.0. The resulting mixture was stirred with a magnetic stirrer at 200 rpm for 1 hour at room temperature to obtain a mixed aqueous suspension. The obtained mixed aqueous suspension was coated on a TPX film substrate in the same manner as in Comparative Example 1 and dried to obtain a dry film having a thickness of 30 µm.

### (Comparative Example 3)

Since L-cystine (isoelectric point; 4.60) was substantially insoluble in water, powdery preparation of L-cystine was used. 81.8 mass parts of powdery L-cystine was added to 100 mass parts of the aqueous PAV1 solution used in Comparative Example 1 so that the molar ratio of L-cystine per PVA monomer unit was 1.0. The resulting mixture was stirred with a magnetic stirrer at 200 rpm for 1 hour at room temperature to obtain a mixed aqueous suspension. The obtained mixed aqueous suspension was coated on a TPX film substrate in the same manner as in Comparative Example 1 and dried to obtain a dry film having a thickness of 20 µm.

### (Comparative Example 4)

Glycine (isoelectric point; 5.97) was adjusted to 16.8 mass% by an addition of water. 318.4 mass parts of the aqueous glycine solution was added to 100 mass parts of the aqueous PAV1 solution used in Example 1 so that the molar ratio of glycine per PVA monomer unit was 1.0. The resulting mixture was stirred with a magnetic stirrer at 200 rpm for 1 hour at 25°C. However, the solution was gelled in 1 hour so that coating was difficult.

The composition of the raw materials; oxygen gas permeability and carbon dioxide gas permeability of the obtained film; and selective permeability to carbon dioxide gas in Comparative Examples 1 to 4 are shown in Table 1.

### (Examples 3 to 9)

Laminates having a coated polymer film were prepared according to the method described in Example 1 by use of the predetermined amounts of the polyalcohol and the basic amino acid shown in Table 1. The composition of the raw materials; oxygen gas permeability and carbon dioxide gas permeability of the obtained film; and selective permeability to carbon dioxide gas are shown in Table 1.

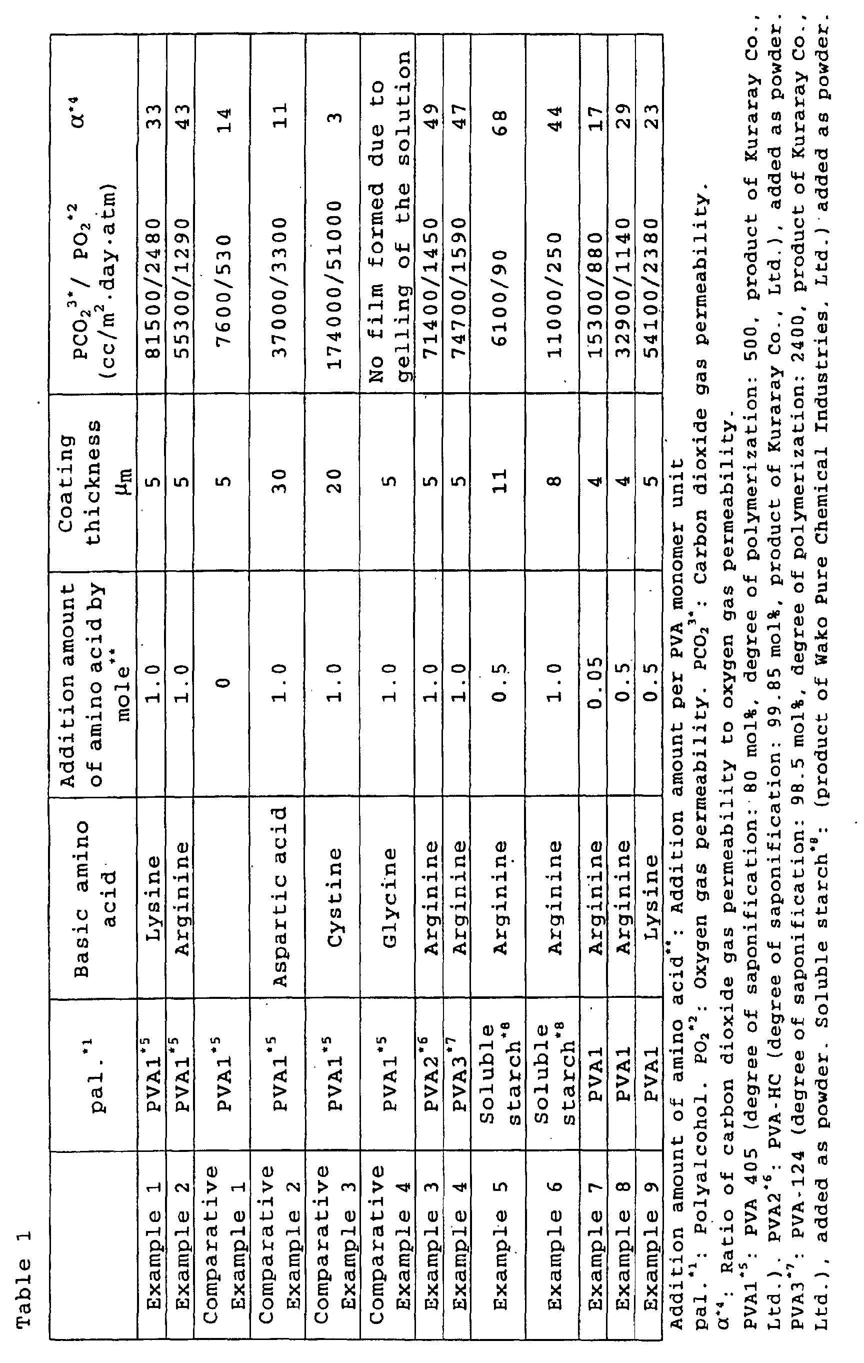

### (Examples 10 to 12)

The dry film side surfaces of the laminate films obtained in the same manner as in Example 2 having a coating thickness of 5 µm (Example 10), 4 µm (Example 11) or 2 µm (Example 12), respectively were applied onto a surface of a film obtained by coating an adhesive on a TPX film as used in Example 1 on the side of the adhesive layer. Thus, laminate films were obtained. The adhesive used was prepared by mixing 10 g of an aromatic polyester-based main ingredient (TAKELAK A-310, product of Takeda Chemical Industries, Ltd.), 2 g of an aromatic polyester-based curing agent (TAKELAK A-3, product of Takeda Chemical Industries, Ltd.) and 53 g of ethyl acetate (product of Wako Pure Chemical Industries, Ltd.) and adjusting to a concentration in which the solids concentration was 10 mass%, The adhesive was coated to a thickness of 1 µm. Layer structure and oxygen gas permeability, carbon dioxide gas permeability, and selective permeability to carbon dioxide gas of the laminate films are shown in Table 2.

### (Examples 13 and 14)

The dry film side surfaces of the laminate films having TPX as a substrate obtained in the same manner as in Example 1 with a coating thickness of 5 µm (Example 13) or 3 µm (Example 14), respectively were applied to the surface of a film obtained by coating the adhesive on the film shown in Table 2 as used in Example 10 on the side of the adhesive. Thus, laminate films were obtained. Layer structure and oxygen gas permeability, carbon dioxide gas permeability, and selective permeability to carbon dioxide gas of the laminate films are shown in Table 2.

### (Examples 15 to 21)

The adhesive as used in Example 10 was coated on a 23 µm thick TPX film, a 30 µm thick ethylene/vinyl acetate copolymer (EVA) (SB-7, product of Tamapoly Co., Ltd.) film, and a 20 µm thick stretched polyethylene (PE-2) (Kojin Polyset UM, product of Kojin Ltd.) film, respectively to obtain a laminate film having a coating thickness in the range of 1.1 µm to 1.6 µm. Then, the mixed aqueous solution obtained in Example 1 was coated on the surface of the adhesive of the TPX film, EVA film and PE-2 film coated with the adhesive as described above by use of a Mayer bar to obtain a laminate film having a dry film thickness of 3 µm to 4 µm. Then, the above-mentioned adhesive was coated on an EVA (SB-7, thickness: 30 µm, product of Tamapoly Co., Ltd.) film, a 50 µm thick polyethylene (PE-1) film (UL-1, product of Tamapoly Co., Ltd.), a stretched polyethylene (PE-2) film, and a polyethylene/polypropylene (PE/PP) nonwoven fabric (product of Idemitsu Petro-Chemical Co., Ltd.) by use of a Mayer bar. The laminate film having a dry film of the previously prepared mixture of PVA1 and L-arginine coated on the surface thereof was laminated on the laminate film having an adhesive (anchor) coated on the surface thereof so that the dry film surface was in contact with the adhesive surface. Thus, the laminate films were obtained. Layer structure, oxygen gas permeability, carbon dioxide gas permeability, and selective permeability to carbon dioxide gas of the laminate films are shown in Table 2.

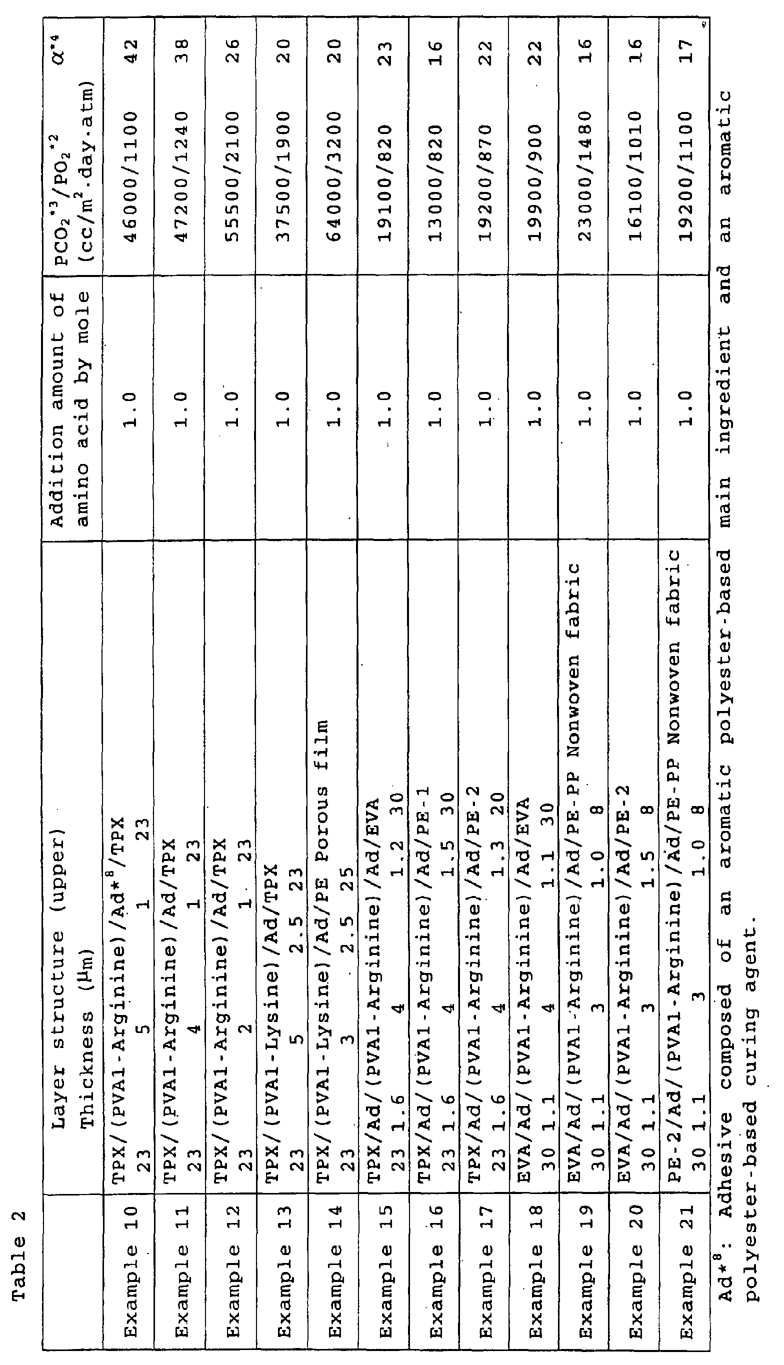

### INDUSTRIAL APPLICABILITY

The film of the present invention comprising a mixture of basic amino acid and a polyalcohol has high selective permeability to carbon dioxide gas as described above. Moreover, the basic amino acid used in the present invention has high safety from the viewpoint of food sanitation. The method for producing the film comprising the composition of the present invention is not complicated so that it can provide the film economically.

## Claims

1. A composition comprising a basic amino acid having an isoelectric point of 7.5 or more and a polyalcohol.

2. A composition according to claim 1, wherein the composition has selective permeability to carbon dioxide (CO₂) gas when it is molded.

3. A composition according to claim 1 or 2, wherein the basic amino acid is at least one selected from the group consisting of lysine, arginine and histidine.

4. A composition according to any one of claims 1 to 3, wherein the polyalcohol is at least one selected from the group consisting of polyvinyl alcohol and starch.

5. A composition according to any one of claims 1 to 4, wherein the mixing ratio (amino group or imino group contributing to the basicity of the basic amino acid/hydroxyl group of the polyalcohol) (molar ratio) is 0.025/1 to 2.0/1.

6. A molded article comprising the composition according to any one of claims 1 to 5.

7. A molded article according to claim 6, wherein the ratio (PCO₂/PO₂), of carbon dioxide gas permeability (PCO₂) to oxygen gas permeability (PO₂) is 15 or more.

8. A molded article according to claim 6 or 7, wherein the molded article is a film.

9. A laminate film comprising at least one film according to claim 8.

10. A laminate film according to claim 9, wherein the laminate film is for packaging food.
